# EUROPÄISCHE PATENTSCHRIFT

(11) **EP 2 751 626 B1**
(45) Veröffentlichungstag und Bekanntmachung des Hinweises auf die Patenterteilung: **21.03.2018**
(21) Anmeldenummer: 12753378.4
(22) Anmeldetag: 22.08.2012
(51) Int. Cl.: G05B 19/409, G06F 9/54

(54) **COMPUTERISIERTES MASCHINENSTEUERUNGSSYSTEM**
COMPUTERISED MACHINE CONTROL SYSTEM
SYSTÈME DE COMMANDE DE MACHINE INFORMATISÉ

(30) Priorität: 31.08.2011 CH 14282011
(43) Veröffentlichungstag der Anmeldung: 09.07.2014
(73) Patentinhaber: Ferag AG, 8340 Hinwil (CH)
(72) Erfinder: SCHÜEPP, Michael, CH-8303 Illnau (CH)
(74) Vertreter: Rentsch Partner AG
(86) Internationale Anmeldenummer: PCT/CH2012/000197
(87) Internationale Veröffentlichungsnummer: WO 2013/029189

(56) Entgegenhaltungen:
- DE-A1-102009 048 746
- US-B1- 6 424 872
- THAMBOULIDIS K C ET AL: "Semantic Web Services in the Development of Distributed Control and Automation Systems", 2007 IEEE INTERNATIONAL CONFERENCE ON ROBOTICS AND AUTOMATION - 10-14 APRIL 2007 - ROMA, ITALY, IEEE, PISCATAWAY, NJ, USA, 10. April 2007 (2007-04-10), Seiten 2940-2945, XP031389243, ISBN: 978-1-4244-0601-2

## Beschreibung

### Technisches Gebiet

Die vorliegende Erfindung betrifft ein computerisiertes Maschinensteuerungssystem. Die vorliegende Erfindung betrifft insbesondere ein computerisiertes Maschinensteuerungssystem zur Steuerung von Maschinen wie Druckmaschinen, Druckproduktverarbeitungsmaschinen, Fördermaschinen, etc.

### Stand der Technik

Die Steuerung von Maschinen, wie Druckmaschinen, Druckproduktverarbeitungsmaschinen, Fördermaschinen, etc., erfolgt in der Regel durch programmierbare Vorrichtungen, auf welche übergeordnete computerisierte Leit- und/oder Bediensysteme über proprietäre Kommunikationsprotokolle zugreifen. Die programmierbaren Vorrichtungen sind beispielsweise speicherprogrammierbare Steuerungen, so genannte Programmable Logic Controllers (PLC), welche elektrisch mit Sensoren und Aktoren der Maschine verbunden sind. Wenn Maschinen ersetzt werden, beispielsweise durch Produkte eines anderen Herstellers, müssen in der Regel aufwendige und komplexe Anpassungen in Programmapplikationen der Leit- und/oder Bediensysteme vorgenommen werden. Dasselbe Problem ergibt sich auch, wenn eine Anlage von mehreren Maschinen mit einer Maschine eines anderen Herstellers erweitert wird. Die proprietären Kommunikationsprotokolle machen auch eine direkte Interaktion unter Maschinen verschiedener Hersteller äusserst schwierig, wenn dies überhaupt möglich ist.

Das Dokument "Sematic Web Services in the Development of Distributed Control and Automation Systems", Thamboulidis et al., 2007 IEEE International Conference on Robotics and Automation, befasst sich mit verteilten Steuerungssystemen (Distributed Control Systems DCS), welche Hardware und Software von mehr als einem Hersteller enthalten. Ein halbautomatischer Entwicklungsprozess für ein DCS umfasst die Schritte des Entwerfens, des Aufstellens und des Überprüfens. Geräte umfassen verschiedene Ein- und Ausgänge oder Betriebssysteme. Die Geräte werden aufgrund einer Device Description Language (DDL) spezifiziert.

### Darstellung der Erfindung

Es ist eine Aufgabe der vorliegenden Erfindung ein computerisiertes Maschinensteuerungssystem zur Steuerung einer Maschine vorzuschlagen, welches mindestens einige Nachteile der bekannten Systeme nicht aufweist. Es ist insbesondere eine Aufgabe der vorliegenden Erfindung ein computerisiertes Maschinensteuerungssystem zur Steuerung von Maschinen vorzuschlagen, welches eine verbesserte Integration von Maschinen verschiedener Hersteller ermöglicht.

Gemäss der vorliegenden Erfindung werden diese Ziele durch die Merkmale der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass ein computerisiertes Maschinensteuerungssystem mit einem Kommunikationsmodul zur Kommunikation mit Anwendungen eines übergeordneten Leit- oder Bediensystems einen von Anwendungen des übergeordneten Leit- oder Bediensystem unabhängigen, maschinenspezifischen Teil und einen maschinenunabhängigen, anwendungsspezifischen Teil aufweist. Der anwendungsunabhängige, maschinenspezifische Teil, umfasst ein maschinenspezifisches Domänenmodell mit Datenpunkten der Maschine und ein Steuermodul, das eingerichtet ist, über ein maschinenspezifisches Kommunikationsprotokoll auf die Datenpunkte der Maschine zuzugreifen und entsprechende Datenpunkt-Objekte im maschinenspezifischen Domänenmodell respektive Datenpunkte in der Maschine zu aktualisieren. Der maschinenunabhängige, anwendungsspezifische Teil umfasst ein anwendungsspezifisches Domänenmodell mit Datenobjekten, die für
das Leit- oder Bediensystem über das Kommunikationsmodul zugreifbar sind, und ein Abbildungsmodul, das eingerichtet ist, auf das maschinenspezifische Domänenmodell zuzugreifen und Datenobjekte auf Datenpunkt-Objekte respektive Datenpunkt-Objekte auf Datenobjekte abzubilden.

In einer Ausführungsvariante ist das Steuermodul eingerichtet, periodisch auf die Datenpunkte der Maschine zuzugreifen, um die entsprechenden Datenpunkt-Objekte im maschinenspezifischen Domänenmodell zu aktualisieren, und das maschinenspezifische Domänenmodell ist eingerichtet, Werte von Datenpunkt-Objekten im maschinenspezifischen Domänenmodell nur auf Anfrage an den anwendungsspezifischen Teil zu übermitteln.

In einer weiteren Ausführungsvariante ist das Steuermodul eingerichtet, über eine speicherprogrammierbare Steuerung auf die Datenpunkte der Maschine zuzugreifen, wobei das maschinenspezifische Kommunikationsprotokoll spezifisch auf die speicherprogrammierbare Steuerung ausgerichtet ist, und das maschinenspezifische Domänenmodell weist Datenpunkt-Objekte derjenigen Datenpunkte der Maschine auf, die über die speicherprogrammierbare Steuerung verfügbar sind.

In einer Ausführungsvariante ist das Steuermodul eingerichtet, die Datenpunkt-Objekte im maschinenspezifischen Domänenmodell erst dann zu aktualisieren, wenn die Datenpunkte, auf die über die speicherprogrammierbare Steuerung zugegriffen wird, einen konsistenten Zustand aufweisen.

In einer bevorzugten Ausführungsvariante ist das anwendungsspezifische Domänenmodell als für das Leit- oder Bediensystem zugreifbarer Dienst einer dienstorientierten Architekturplattform ausgeführt, wobei eine Dienstdefinition und die Datenobjekte des anwendungsspezifischen Domänenmodells für die Anwendungen des übergeordneten Leit- oder Bediensystems über eine für das Leit- oder Bediensystem zugreifbare Schnittstelle der dienstorientierten Architekturplattform definiert sind. Das Kommunikationsmodul umfasst beispielsweise ein Laufzeitmodul mit Kommunikationsfunktionen der Windows Communication Foundation (WCF), und das anwendungsspezifische Domänenmodell ist als Dienst von WCF ausgeführt, wobei eine Dienstdefinition und die Datenobjekte des anwendungsspezifischen Domänenmodells für die Anwendungen des übergeordneten Leit- oder Bediensystems über eine Contract Schnittstelle von WCF definiert sind.

In einer bevorzugten Ausführungsvariante ist das maschinenspezifische Domänenmodell als verfügbarer Dienst einer dienstorientierten Architekturplattform ausgeführt, wobei eine Dienstdefinition und die Datenpunkt-Objekte des maschinenspezifischen Domänenmodells über eine für Dienstkonsumenten zugreifbare Schnittstelle der dienstorientierten Architekturplattform definiert sind, und der Dienst für die Dienstkonsumenten über die dienstorientierte Architekturplattform zugreifbar ist. Das maschinenspezifische Domänenmodell ist beispielsweise als Dienst von WCF ausgeführt, wobei eine Dienstdefinition und die Datenobjekte des maschinenspezifischen Domänenmodells über eine Contract Schnittstelle von WCF definiert sind.

In einer Ausführungsvariante sind die Dienste der dienstorientierten Architekturplattform jeweils eingerichtet, vom übergeordneten Leit- oder Bediensystem periodische Wachhalteanfragen zu empfangen und zur Sicherstellung von Verbindungen mit dem Leit- oder Bediensystem unmittelbar mit einer Wachhalteantwort zu beantworten.

In einer weiteren Ausführungsvariante ist das Steuermodul eingerichtet, mittels Anfragemeldungen periodisch die Verfügbarkeit der Maschine zu überprüfen und dem maschinenspezifischen Domänenmodell einen Statuswert zuzuordnen, der angibt, dass das Domänenmodell nicht mit der Maschine verbunden ist, wenn innerhalb einer definierten Zeitdauer eine Antwortmeldung auf die Anfragemeldung ausbleibt.

Neben dem computerisierten Maschinensteuerungssystem betrifft die vorliegende Erfindung zudem ein computerimplementiertes Verfahren zum Steuern von Maschinen und ein Computerprogrammprodukt zur Steuerung eines Maschinensteuerungssystems. Vorzugsweise umfasst das Computerprogrammprodukt ein computerlesbares Medium mit darauf gespeichertem Computerprogrammcode zur Steuerung eines oder mehrerer Prozessoren eines Maschinensteuerungssystems, derart dass das Maschinensteuerungssystem das Verfahren zum Steuern von Maschinen ausführt. Dabei werden die Schritte ausgeführt, dass das Maschinensteuerungssystem ein von Anwendungen eines übergeordneten Leit- oder Bediensystems unabhängiges, maschinenspezifisches Domänenmodell mit Datenpunkten der Maschine erstellt, und über ein maschinenspezifisches Kommunikationsprotokoll auf die Datenpunkte der Maschine zugreift und entsprechende Datenpunkt-Objekte im maschinenspezifischen Domänenmodell respektive Datenpunkte in der Maschine aktualisiert. Zudem erstellt das Maschinensteuerungssystem ein maschinenunabhängiges, anwendungs-spezifisches Domänenmodell mit Datenobjekten, die für das Leit- oder Bediensystem zugreifbar sind, und greift auf das maschinenspezifische Domänenmodell zu und bildet Datenobjekte auf Datenpunkt-Objekte respektive Datenpunkt-Objekte auf Datenobjekte ab.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
- Figur 1:: zeigt ein Blockdiagram, welches schematisch ein computerisiertes Maschinensteuerungssystem illustriert, das einen anwendungsunabhängigen, maschinenspezifischen Teil und einen maschinenunabhängigen, anwendungsspezifischen Teil umfasst, um auf Datenpunkte einer Maschine zuzugreifen.
- Figur 2:: zeigt ein Blockdiagram, welches schematisch mehrere computerisierte Maschinensteuerungssysteme und übergeordnete Leit- und Bediensysteme illustriert, welche über eine dienstorientierte Architekturplattform kommunikationsfähig miteinander verbunden sind.
- Figur 3:: zeigt ein Blockdiagram, welches schematisch ein computerisiertes Maschinensteuerungssystem illustriert, in welchem zum Zugreifen auf Datenpunkte einer Maschine ein anwendungsunabhängiger, maschinenspezifischer Teil und ein maschinenunabhängiger, anwendungsspezifischer Teil auf verschiedenen Computersystemen ausgeführt und über eine dienstorientierte Architekturplattform kommunikationsfähig miteinander verbunden sind.
- Figur 4:: zeigt ein Blockdiagram, welches schematisch mehrere computerisierte Maschinensteuerungssysteme und übergeordnete Leit- und Bediensysteme illustriert, bei welchen die anwendungsunabhängigen, maschinenspezifischen Teile und die maschinenunabhängigen, anwendungsspezifischen Teile auf verschiedenen Computersystemen ausgeführt und über eine dienstorientierte Architekturplattform kommunikationsfähig miteinander verbunden sind.
- Figur 5:: zeigt ein Blockdiagramm eines Computersystems zum Erzeugen einer grafischen Benutzerschnittstelle auf einer Anzeige.
- Figur 6:: zeigt ein Flussdiagramm, welches schematisch ein Beispiel einer Sequenz von Schritten für die Erzeugung einer grafischen Benutzerschnittstelle auf einer Anzeige illustriert.
- Figur 7a:: zeigt ein Beispiel eines auf einer Anzeige dargestellten Hauptfensters.
- Figur 7b:: zeigt ein Beispiel mehrerer auf der Anzeige dargestellter Fensterbereiche des Hauptfensters.
- Figur 7c:: zeigt ein Beispiel des auf der Anzeige dargestellten Hauptfensters mit mehreren Fensterbereichen und einem dargestellten Login-Bereich.
- Figur 7d:: zeigt ein Beispiel des auf der Anzeige dargestellten Hauptfensters mit einem dargestellten Login-Bereich sowie mehreren Fensterbereichen und darin dargestellten Widgets.

### Wege zur Ausführung der Erfindung

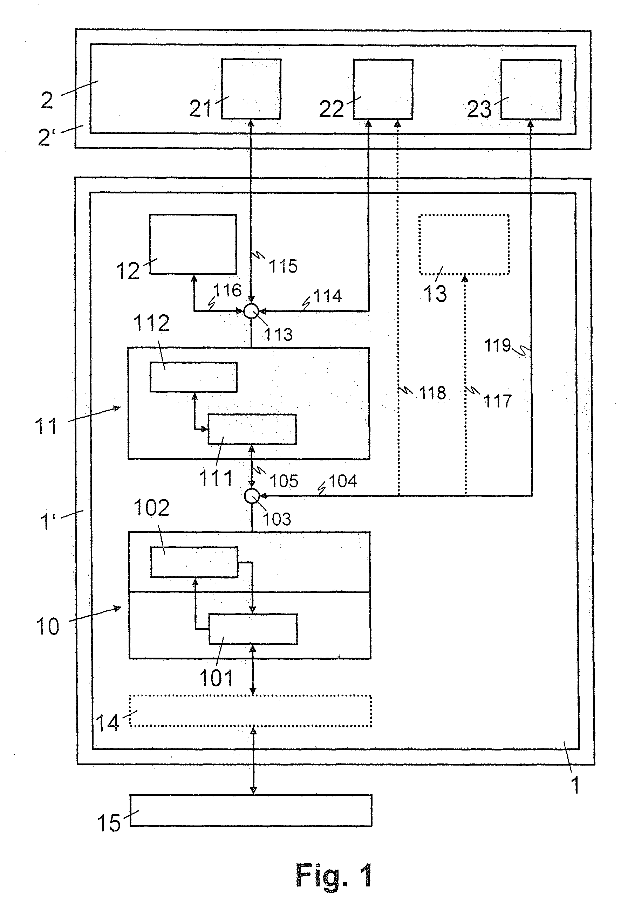

In den Figuren 1, 2 und 3 bezieht sich das Bezugszeichen 1 auf ein computerisiertes Maschinensteuerungssystem zur Steuerung von Maschinen 15, beispielsweise Druckmaschinen, Druckproduktverarbeitungsmaschinen, Fördermaschinen, etc. Die Steuerung der Maschine 15 erfolgt über eine programmierbare Vorrichtung, beispielsweise über eine speicherprogrammierbare Steuerung, ein so genannter Programmable Logic Controller (PLC) 14, welche mit Sensoren und Aktoren der Maschine 15 (elektrisch) verbunden ist. Je nach Ausführungsvariante ist die programmierbare Vorrichtung 15 direkt oder über einen Microcontroller der Maschine 15 mit der Maschine 15 respektive deren Sensoren und Aktoren verbunden.

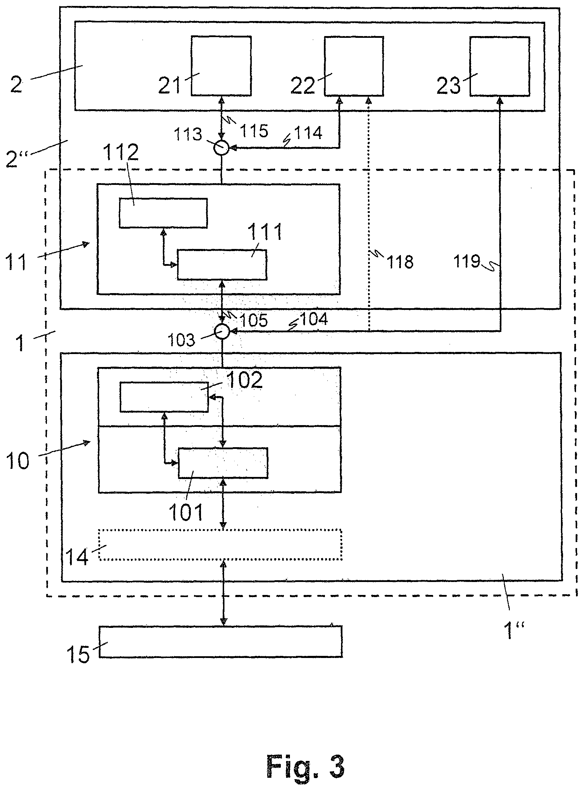

In den Figuren 1 und 3 bezieht sich das Bezugszeichen 2 auf ein computerisiertes Leit- oder Bediensystem. Das Leit- oder Bediensystem 2 ist auf einem betriebsfähigen Computersystem 2' mit einem oder mehreren Prozessoren ausgeführt, welche mit einer oder mehreren Anzeigen verbunden sind, beispielsweise berührungsempfindliche Anzeigen, insbesondere so genannte Multitouch Anzeigen.

Wie in den Figuren 1 und 3 schematisch dargestellt ist, umfasst das Leit- oder Bediensystem 2 mehrere funktionale Module, beispielsweise eine Benutzerschnittstelle 21 zur Konfiguration, Überwachung und Bedienung der Produktion auf einer oder mehreren Maschinen 15, 15a, 15b, 15c, 15d; eine Benutzerschnittstelle 23 zur Wartung und Diagnose einer oder mehreren Maschinen 15, 15a, 15b, 15c, 15d; und ein Dienstmodul 22 mit mehreren übergeordneten Diensten, so genannte High Level Services wie beispielsweise Kommandos zum Starten, Stoppen oder Abrechen der Produktion, die für Dienstkonsumenten wie die Benutzerschnittstellen 21, 23 zugreifbar und ausführbar sind. Wie später detaillierter beschrieben wird, basieren die Benutzerschnittstellen 21, 23 vorzugsweise auf so genannten Plugins und umfassen mehrere selektierbare und aktivierbare Widget-Plugins. Das Dienstmodul 22 ist vorzugsweise als Plugin und Dienst einer dienstorientierten Architekturplattform 100 ausgeführt, beispielsweise die Windows Communication Foundation (WCF) in .Net von Microsoft Corporation.

Wie in den Figuren 1 und 3 dargestellt ist, umfasst das Maschinensteuerungssystem 1 funktionale Module, die in einen anwendungsunabhängigen, maschinenspezifischen Teil 10 und einen maschinenunabhängigen, anwendungsspezifischen Teil 11 aufgeteilt sind. Abhängig von der Ausführungsvariante und/oder Konfiguration umfassen die funktionalen Module des Maschinensteuerungssystems 1 zudem eine Benutzerschnittstelle 12 zur Konfiguration, Überwachung und Bedienung der Produktion auf einer oder mehreren Maschinen 15, 15a, 15b, 15c, 15d und/oder eine Benutzerschnittstelle 13 zur Wartung und Diagnose einer oder mehrerer Maschinen 15, 15a, 15b, 15c, 15d. Die Benutzerschnittstellen 12, 13 basieren vorzugsweise auf so genannten Plugins und umfassen mehrere selektierbare und aktivierbare Widget-Plugins, wie später detaillierter beschrieben wird.

In der Ausführungsvariante gemäss Figur 1 sind der maschinenspezifische Teil 10 und der anwendungsspezifische Teil 11 auf dem selben betriebsfähigen Computersystem 1' ausgeführt, beispielsweise auf einem oder mehreren separaten Prozessoren, die mit dem PLC 14 verbunden sind, oder auf einem oder mehreren Prozessoren des PLC 14. Das Computersystem 1' mit dem Maschinensteuerungssystem 1 ist als Teil der Maschine 15 ausgeführt, direkt an der Maschine 15 angebracht oder getrennt und entfernt davon angeordnet. Das Computersystem 1' ist beispielsweise als so genannter Embedded PC ausgeführt.

In der Ausführungsvariante gemäss Figur 3 sind der maschinenspezifische Teil 10 und der anwendungsspezifische Teil 11 auf verschiedenen Computersystemen 1 ", 2" ausgeführt. Dabei ist der maschinenspezifische Teil 10 auf dem Computersystem 1" ausgeführt, beispielsweise auf einem oder mehreren separaten Prozessoren, die mit dem PLC 14 verbunden sind, oder auf einem oder mehreren Prozessoren des PLC 14. Das Computersystem 1" mit dem maschinenspezifischen Teil 10 ist als Teil der Maschine 15 ausgeführt, direkt an der Maschine 15 angebracht oder getrennt und entfernt davon angeordnet. Der anwendungsspezifische Teil 11 hingegen ist auf dem Computersystem 2" des Leit- oder Bediensystems 2 ausgeführt.

Der maschinenspezifische Teil 10 umfasst ein Steuermodul 101 und ein maschinenspezifisches Domänenmodell (Domain Model) 102. Das Steuermodul 101 ist eingerichtet, über ein maschinenspezifisches Kommunikationsprotokoll, z.B. TCP/IP, Profibus, oder ADS (Automation Device Specification) von der Firma Beckhoff, auf die Datenpunkte der Maschine 15 zuzugreifen, um den aktuellen Wert eines oder mehrerer Datenpunkte zu lesen oder zu schreiben.

Dabei ist ein Datenpunkt ein Wert der von der Maschine 15 ausgegeben wird, zum Beispiel ein Mess- oder Zählerwert eines Sensors oder Zählers der Maschine 15, oder in die Maschine 15 eingegeben wird, beispielsweise ein Steuerbefehl, Steuerparameter oder Stellwert. Datenpunkte umfassen insbesondere auch (aktuelle) Statuswerte und Zustandsinformationen der Maschine 15. Ein Datenpunkt repräsentiert die Eingabe- oder Ausgabe von Werten der Maschine 15, insbesondere über einen Prozessor der Maschine 15. Das maschinenspezifische Domänenmodell 102 umfasst maschinenspezifische Datenpunkt-Objekte. Dabei sind die maschinenspezifischen Datenpunkt-Objekte Datenobjekte, die jeweils einen oder mehrere Datenpunkte der Maschine 15 abbilden. Wenn das Steuermodul 101 über den PLC 14 auf die Datenpunkte der Maschine 15 zugreift, ist das maschinenspezifische Kommunikationsprotokoll spezifisch auf den betreffenden PLC 14 ausgerichtet, und das maschinenspezifische Domänenmodell 102 weist ausschliesslich Datenpunkt-Objekte auf, die über den PLC 14 verfügbar sind. Der Lesevorgang erfolgt periodisch und zudem aufgrund eines expliziten Lesebefehls. Aktuelle Werte von gelesenen Datenpunkten werden vom Steuermodul 101 in ein entsprechendes Datenpunkt-Objekt des maschinenspezifischen Domänenmodells 102 geschrieben. Der Schreibvorgang erfolgt in der Regel aufgrund eines expliziten Schreib- oder Dienstbefehls an das maschinenspezifische Domänenmodell 102. Dabei wird der aktuelle Wert des betreffenden Datenpunkt-Objekts im maschinenspezifischen Domänenmodell 102 vom Steuermodul 101 in den entsprechenden Datenpunkt der Maschine 15 respektive des PLC 14 geschrieben. Überdies soll hier festgehalten werden, dass ein Datenpunkt - und entsprechend auch ei n Datenpunkt-Objekt - mehrere Datenwerte umfassen kann, beispielsweise eine Tabelle oder Matrix von Datenwerten, die in einer (strukturierten) Datei angeordnet sind.

In einer Ausführungsvariante, legt das Steuermodul 101 die unmittelbar von der Maschine 15 oder über den PLC 14 erfassten Datenpunkte in einem Zwischenspeicher ab und aktualisiert die entsprechenden Datenpunkt-Objekte im maschinenspezifischen Domänenmodell 102 erst dann, wenn sämtliche oder zumindest ein definierter Teil der Datenpunkte einen konsistenten Zustand aufweisen, also keine der betreffenden Datenpunkte einen Wert eines alten Zustands oder eines instabilen Zwischenzustands aufweisen. Somit werden Snapshots mit aktuellen und zustandskonsistenten Datenpunkten der Maschine 15 respektive von definierten Teilen der Maschine 15 erzeugt.

In einer weiteren Variante, prüft das Steuermodul 101 periodisch, ob die Maschine 15 respektive der PLC 14 verfügbar, d.h. verbunden, betriebsbereit und zugreifbar, ist. Dazu sendet das Steuermodul 101 periodisch entsprechende Anfragemeldungen an die Maschine 15 respektive den PLC 14. Wenn innerhalb einer definierten Zeitdauer im Steuermodul 101 keine Rückmeldung von der Maschine 15 respektive dem PLC 14 empfangen wird, setzt das Steuermodul 101 einen dem maschinenspezifischen Domänenmodell 102 zugeordneten Status auf einen Wert, der angibt, dass das Domänenmodell 102 nicht mit der Maschine 15 verbunden ist.

Der anwendungsspezifische Teil 11 umfasst ein anwendungsspezifisches Domänenmodell (Domain Model) 112 und ein Abbildungsmodul 111. Das anwendungsspezifische Domänenmodell 112 umfasst anwendungsspezifische Datenobjekte. Das Abbildungsmodul 111 ist eingerichtet, über den entsprechenden Dienst 103 der dienstorientierten Architekturplattform 100 auf das maschinenspezifische Domänenmodell 102 zuzugreifen. In einer Schreibfunktion werden anwendungsspezifische Datenobjekte auf maschinenspezifische Datenpunkt-Objekte abgebildet, dabei schreibt das Abbildungsmodul 111 aktuelle Werte von anwendungsspezifischen Datenobjekten in zugeordnete Datenpunkt-Objekte des maschinenspezifischen Domänenmodells 102. In einer Lesefunktion werden maschinenspezifische Datenpunkt-Objekte auf anwendungsspezifische Datenobjekte abgebildet, dabei liest das Abbildungsmodul 111 aktuelle Werte von einem oder mehreren maschinenspezifischen Datenpunkt-Objekten und schreibt diese in zugeordnete Datenobjekte des anwendungsspezifischen Domänenmodells 112. Sowohl der Lesevorgang als auch der Schreibvorgang erfolgen ausschliesslich aufgrund von expliziten Schreib-, Lese- oder Dienstbefehlen an das anwendungsspezifische Domänenmodell 112.

Das maschinenspezifische Domänenmodell 102 und das anwendungsspezifische Domänenmodel 112 sind vorzugsweise als verfügbare Dienste 103 respektive 113 der dienstorientierten Architekturplattform 100, z.B. WCF, ausgeführt. Dabei sind die verfügbaren Funktionen, z.B. Schreiben oder Lesen, und Datenpunkt-Objekte respektive anwendungsspezifische Datenobjekte der Domänenmodelle 102, 112 über eine für Dienstkonsumenten zugreifbare Schnittstelle der dienstorientierten Architekturplattform 100 definiert und abrufbar. Die definierten Dienste 103, 113 sind für Dienstkonsumenten über die dienstorientierte Architekturplattform 100 zugreifbar, wie in den Figuren 1 und 3 schematisch durch die Pfeile 104 und 105 respektive 114, 115 und 116 angedeutet ist. Die Domänenmodelle 102, 112 liefern ihren Dienstkonsumenten maschinenspezifische Datenpunkt-Objekte respektive anwendungsspezifische Datenobjekte nur auf Anfrage, d.h. wenn der Dienstkonsument auf den entsprechenden Dienst 103, 113 zugreift und das betreffende Datenpunkt-Objekt respektive Datenobjekt anfordert. Beispielsweise erhält der anwendungsspezifische Teil 11 nur dann Datenpunkt-Objekte vom maschinenspezifischen Domänenmodell 102, wenn er diese explizit über den entsprechenden Dienst 103 anfordert, und die Benutzerschnittstellen 12, 13, 21 und das Dienstmodul 22 erhalten vom anwendungsspezifische Teil 11 nur dann Datenobjekte vom anwendungsspezifischen Domänenmodell 112, wenn sie diese explizit über den entsprechenden Dienst 113 anfordern.

Wie mit den Pfeilen 117, 118 und 119 schematisch angedeutet ist, sind das Dienstmodul 22 und die Benutzerschnittstellen 23 und 13 in einer Variante eingerichtet direkt über den Dienst 103 auf das maschinenspezifische Domänenmodell 102 zuzugreifen. Dazu sind maschinenspezifische Anpassungen von Dienstmodul 22 und Benutzerschnittstellen 23, 13 erforderlich.

Für den Datenaustausch sind die Computersystem 1', 1", 2', 2" über eine Kommunikationsverbindung verbunden, beispielsweise über einen Datenbus oder ein lokales Netzwerk (LAN). Die Kommunikation unter den funktionalen Modulen, die als Dienste der dienstorientierten Architekturplattform 100 ausgeführt sind, erfolgt vorzugsweise über Kommunikationsfunktionen der dienstorientierten Architekturplattform 100, z.B. WCF, die beispielsweise als Teil einer Laufzeitumgebung der dienstorientierten Architekturplattform 100 verfügbar sind. Um zu verhindern, dass Verbindungen zwischen Diensten der dienstorientierten Architekturplattform 100 wegen Inaktivität innerhalb einer definierten Zeitdauer (timeout) beendet werden, sind die als Dienste ausgeführten funktionalen Module eingerichtet, periodisch Wachhalteanfragen an diejenigen Dienste zu übermitteln, von denen sie Dienstkonsumenten sind, respektive von ihren Dienstkonsumenten periodische Wachhalteanfragen zu empfangen und unmittelbar mit einer Wachhalteantwort zu beantworten.

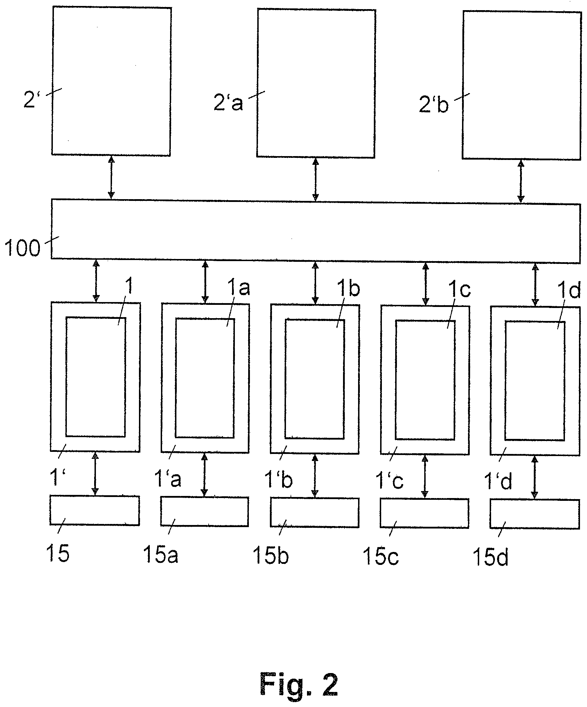

Die Figur 2 illustriert eine Anlage mit mehreren Maschinen 15, 15a, 15b, 15c, 15d, die jeweils von einem Maschinensteuerungssystem 1, 1a, 1b, 1c, 1d angesteuert werden, dessen funktionale Module, wie in der Figur 1 illustriert, auf einem gemeinsamen Computersystem 1', 1'a, 1'b, 1'c, 1'd ausgeführt sind. Wie in der Figur 2 ersichtlich ist, ist das Leit- oder Bediensystem 2 auf mehreren betriebsfähigen Computersystemen 2', 2'a, 2'b ausgeführt, und umfasst mehrere sich ergänzende und/oder redundante Programmapplikationen (Anwendung). Wie in der Figur 2 schematisch illustriert ist, kommunizieren und interagieren die auf den Computersystemen 1', 1'a, 1'b, 1'c, 1'd, 2', 2'a, 2'b ausgeführten funktionalen Module der Maschinensteuerungssysteme 1, 1a, 1b, 1c, 1d und des Leit- oder Bediensystems 2 über die dienstorientierte Architekturplattform 100, z.B. WCF, und deren Kommunikationsfunktionen.

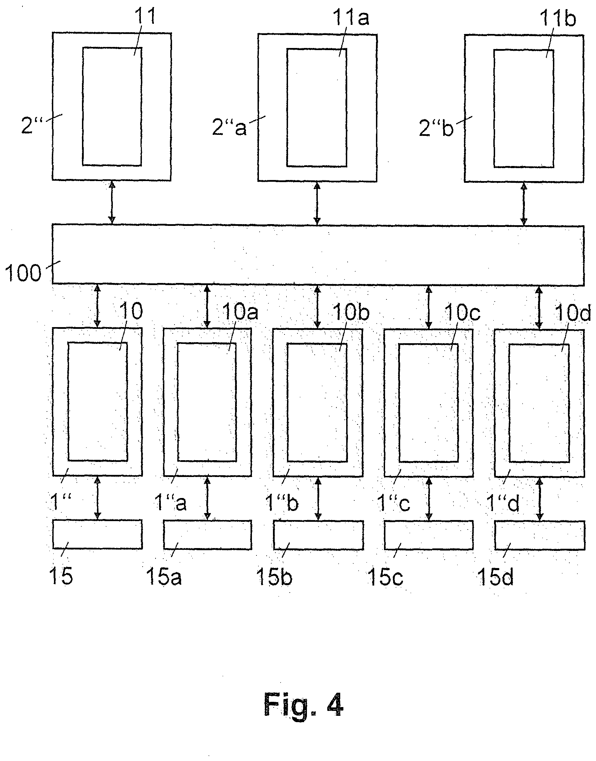

Die Figur 4 illustriert eine Anlage mit mehreren Maschinen 15, 15a, 15b, 15c, 15d, die jeweils von einem Maschinensteuerungssystem 1 angesteuert werden, dessen funktionale Module, wie in der Figur 3 illustriert, jeweils auf verschiedenen Computersystemen ausgeführt sind. Die maschinenspezifischen Teile 10, 10a, 10b, 10c, 10d sind jeweils auf dem mit der betreffenden Maschine 15, 15a, 15b, 15c, 15d verbundenen Computersystem 1", 1"a, 1"b, 1"d ausgeführt. Die anwendungsspezifischen Teile 11, 11a, 11b hingegen sind auf den Computersystemen 2", 2"a, 2"b des Leit- oder Bediensystems 2 ausgeführt, welches mehrere sich ergänzende und/oder redundante Programmapplikationen umfasst. Wie in der Figur 4 schematisch illustriert ist, kommunizieren und interagieren die auf den Computersystemen 1", 1"a, 1"b, 1"c, 1"d, 2", 2"a, 2"b ausgeführten funktionalen Module der maschinenspezifischen Teile 10, 10a, 10b, 10c, 10d, der anwendungsspezifischen Teile 11, 11a, 11b und des Leit- oder Bediensystems 2 über die dienstorientierte Architekturplattform 100, z.B. WCF, und deren Kommunikationsfunktionen.

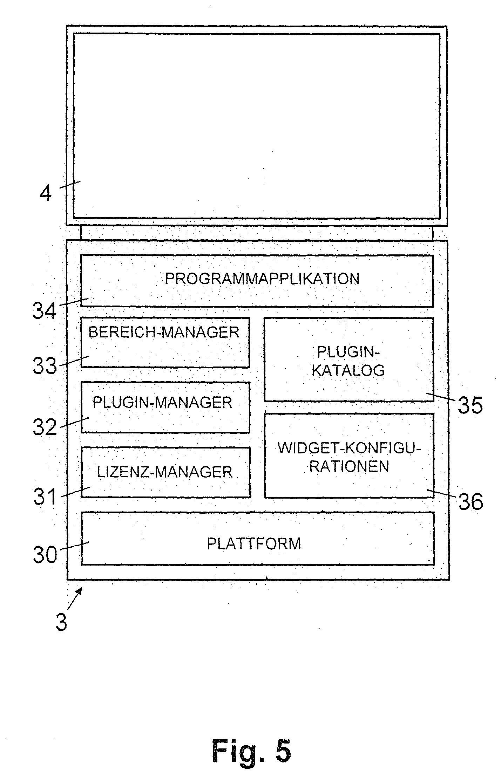

In der Figur 5 bezieht sich das Bezugszeichen 3 auf ein Computersystem mit einem oder mehreren betriebsfähigen Computern und jeweils einem oder mehreren Prozessoren, welche mit einer oder mehreren Anzeigen 4 verbunden sind, beispielsweise berührungsempfindliche Anzeigen, insbesondere so genannte Multitouch Anzeigen. Das Computersystem 4 umfasst beispielsweise eines oder mehrere der oben beschriebenen Computersysteme 1', 1'a, 1'b, 1'c, 1'd, 1", 1"a, 1"b, 1"c, 1"d, 2', 2'a, 2'b, 2", 2"a und/oder 2"b.

Wie in der Figur 5 schematisch dargestellt ist umfasst das Computersystem 3 mehrere funktionale Module, insbesondere eine Plattform 30, einen Lizenz-Manager 31, einen Plugin-Manager 32, einen Bereich-Manager 33, mindestens eine Programmapplikation 34, ein Plugin-Katalog 35 und gespeicherte (benutzerspezifische) Widget-Konfigurationen 36. Die Widget-Konfigurationen 36 definieren die Ansichten und anzuzeigenden Dateninhalte eines Widgets, die für einen bestimmten Benutzer zu verwenden sind. Widget-Konfigurationen 36 werden beispielsweise anfänglich in einer Benutzergrundkonfiguration definiert und später jeweils beim Herunterfahren der Applikation und/oder Logout des Benutzers aufgrund der aktuellen Ansichten und angezeigten Dateninhalte der Widgets bestimmt und gespeichert.

Die Plattform 30 umfasst mehrere Komponenten, insbesondere Komponenten einer Laufzeitumgebung zur Unterstützung einer dienstorientierten Architekturplattform, einer dynamischen Applikationserweiterung und Grafikfunktionen, beispielsweise .NET Komponenten von Microsoft Corp. für WCF, MEF (Managed Extensibility Framework) und WPF (Windows Presentation Foundation).

Der Plugin-Katalog 35 ist beispielsweise in MEF ausgeführt und umfasst mehrere Plugins respektive Referenzen auf gespeicherte Plugins. Plugins sind Softwarekomponenten (Computerprogramme), die eine bestehende softwarebasierte Programmapplikation erweitern, so dass die Programmapplikation mit den durch das Plugin bereitgestellten Funktionen erweitert wird. Die Plugins sind beispielsweise beim Aufstarten oder zur Laufzeit einer Programmapplikation (Anwendung) dynamisch als Ergänzung zur Programmapplikation ladbar und ausführbar. Der Plugin-Katalog 35 umfasst insbesondere ein Hauptfenster-Plugin, mehrere Fensterbereich-Plugins, ein Login-Plugin, ein Widget-Manager-Plugin und mehrere Widget-Plugins.

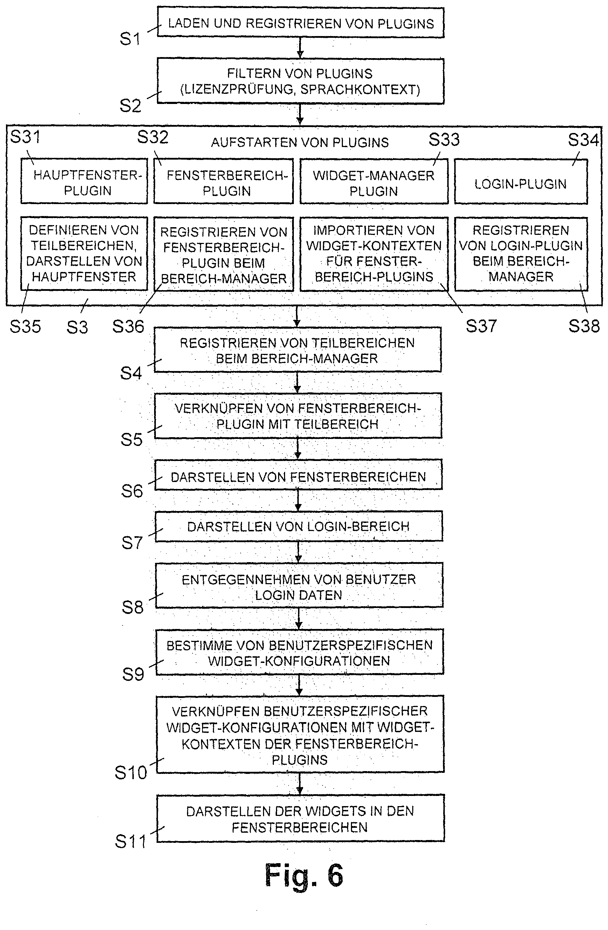

In den folgenden Abschnitten wird mit Bezug auf die Figur 6 beispielhaft eine Sequenz von Schritten zum Generieren einer grafischen Benutzerschnittstelle 6 für eine Programmapplikation 34 auf einer Anzeige 4 beschrieben.

Im Schritt S1, werden ladbare gespeicherte Plugins respektive Referenzen auf diese Plugins in den Plugin-Katalog 35 geladen, beispielsweise per MEF. Schritt S1 wird beispielsweise als vorbereitender Schritt als Teil einer Systemkonfiguration ausgeführt. Jedes Plugin ist mit verschiedenen Attributen versehen. Diese Plugin-Attribute definieren zumindest Aufstarterfordernisse und Aufstarteinschränkungen und umfassen insbesondere auch Sprachattribute und Lizenzattribute.

Im Schritt S2, werden die Plugins im Plugin-Katalog 35 basierend auf ihren Attributen gefiltert nachdem die Programmapplikation 34 gestartet wurde. Dabei überprüft der Lizenz-Manager 31 für jedes Plugin ob eine gültige Lizenz vorliegt. Zudem wird die Sprache überprüft, die bei Plugins mit Schnittstellenfunktion für die Interaktion mit einem Benutzer verwendet wird.

Im Schritt S3 startet der Plugin-Manager 32 die Plugins entsprechend ihrer Aufstarterfordernisse und Aufstarteinschränkungen in der erforderlichen, beispielsweise benutzerspezifischen Sprache, wenn dafür jeweils eine ausreichende Lizenz vorliegt. Die Plugins werden beispielsweise per MEF gestartet.

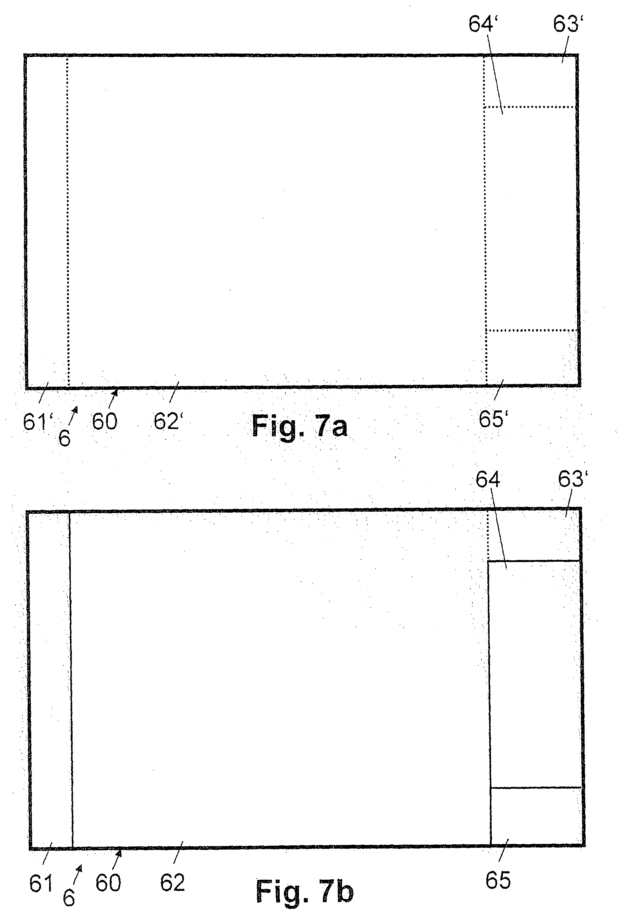

Im Schritt S31 wird das Hauptfenster-Plugin gestartet. Wie mit dem Bezugszeichen S35 angedeutet wird, stellt das Hauptfenster-Plugin auf der Anzeige 4 ein Hauptfenster dar und definiert im Hauptfenster mehrere Teilbereiche. Wie in der Figur 7a dargestellt ist, ist das Hauptfenster 60 im Wesentlichen bloss ein auf der Anzeige 4 dargestellter Rahmen (Shell), für welchen auf der Anzeige 4 nicht ersichtlich mehrere Teilbereiche 61', 62', 63', 64', 65' definiert werden. Die Teilbereiche 61', 62', 63', 64', 65' werden vom Hauptfenster-Plugin beispielsweise in WPF definiert.

Im Schritt S32 werden zudem die Fensterbereich-Plugins gestartet. Wie mit dem Bezugszeichen S36 angedeutet wird, registrieren sich die Hauptfenster-Plugins jeweils beim Bereich-Manager 33.

Im Schritt S33 wird das Widget-Manager-Plugin gestartet. Wie mit dem Bezugszeichen S37 angedeutet wird, importiert das Widget-Manager-Plugin Widget-Kontexte, die jeweils den Fensterbereich-Plugins zugeordnet gespeichert sind, beispielsweise per MEF. Die Widget-Kontexte definieren mögliche, zulässige Widgets, die beispielsweise in einem zugeordneten Fensterbereich einfügbar sind.

Im Schritt S34 wird das Login-Plugin gestartet. Wie mit dem Bezugszeichen S38 angedeutet wird, registriert sich das Login-Plugin beim Bereich-Manager 33.

In der Figur 6 wird im Zusammenhang mit Schritt S3 nur eine Auswahl von Plugins angezeigt, die aufgestartet werden, die im Zusammenhang mit der Erzeugung der grafischen Benutzerschnittstelle 6 von besonderem Interesse sind. Der Fachmann wird verstehen, dass jedoch auch weitere Plugins aufgestartet werden, beispielsweise die Widget-Plugins.

Im Schritt S4 werden die, beispielsweise in WPF definierten Teilbereiche 61', 62', 63', 64', 65' beim Bereich-Manager 33 angemeldet (registriert), beispielsweise durch WPF, das zudem sämtliche definierten Teilbereiche 61', 62', 63', 64', 65' initialisiert.

Im Schritt S5 verknüpft der Bereich-Manager 33 die angemeldeten (registrierten) Teilbereiche 61', 62', 63', 64', 65' mit den Fensterbereich-Plugins, die jeweils für die Teilbereiche 61', 62', 63', 64', 65' vorgesehen sind. Dabei wird insbesondere auch das Login-Plugin mit dem dafür vorgesehenen Teilbereich 63' verknüpft.

Im Schritt S6 stellen die Fensterbereich-Plugins auf der Anzeige 4 jeweils im Teilbereich 61', 62', 64', 65' des Hauptfensters 60 mit dem sie verknüpft sind, ihren Fensterbereich dar. Wie in der Figur 7b dargestellt ist, sind nun auf der Anzeige 4 die Fensterbereiche 61, 62, 64, 65 im Hauptfenster 60 der Benutzerschnittstelle 6 sichtbar dargestellt.

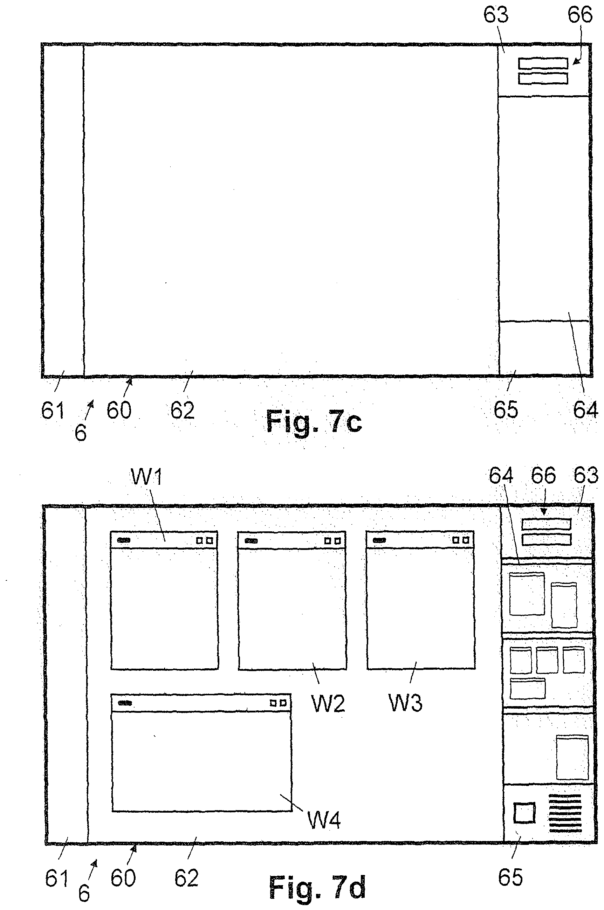

Im Schritt S7 stellt das Login-Plugin auf der Anzeige 4 im Teilbereich 63' des Hauptfensters 60 mit dem es verknüpft ist, seinen Login-Bereich dar. Wie in der Figur 7c dargestellt ist, ist nun auf der Anzeige 4 zusätzlich zu den Fensterbereichen 61, 62, 64, 65 im Hauptfenster 60 der Benutzerschnittstelle 6 auch der Login-Bereich 63 mit entsprechenden Login-Eingabefeldern 66 sichtbar dargestellt.

Im Schritt S8, nimmt das Login-Plugin vom Benutzer Login-Daten über die Login-Eingabefelder 66 entgegen, beispielsweise ein Benutzername und ein Passwort oder Zugangscode.

Im Schritt S9, lädt das Widget-Manager-Plugin gemäss dem Login des (berechtigten) Benutzers die gespeicherten benutzerspezifischen Widget-Konfigurationen 36.

Im Schritt S10, verknüpft das Widget-Manager-Plugin die Widget-Konfigurationen 36 des Benutzers mit den zuvor importierten Widget-Kontexten, die den Fensterbereich-Plugins zugeordnet sind. Dabei werden die durch die benutzerspezifischen Widget-Konfigurationen 36 definierten Ansichten mit den Widget-Kontexten der Fensterbereiche verknüpft.

Im Schritt S11, erzeugen die Widget-Plugins jeweils ihre Schnittstelleneingabelemente und/oder Schnittstellenausgabelemente und fügen sie auf der Anzeige 4 jeweils in denjenigen Fensterbereich ein, mit dem sie durch die bestimmten Widget-Kontexte verknüpft sind und zwar in der durch die benutzerspezifischen Widget-Konfigurationen 36 definierten Ansicht und den darin anzuzeigenden Dateninhalten. Wie in der Figur 7d dargestellt ist, sind nun auf der Anzeige 4 in den Fensterbereichen 61, 62, 64, 65 des Hauptfensters 60 der Benutzerschnittstelle 6 zusätzlich auch die Widgets W1, W2, W3, W4 sichtbar dargestellt.

Abschliessend soll angeführt werden, dass die oben angeführten funktionalen Module vorzugsweise als programmierte Softwaremodule ausgeführt sind, welche Programmcode zur Steuerung von jeweils einem oder mehreren Prozessoren eines Computers umfassen und auf einem Computerprogrammprodukt gespeichert sind, das fest oder entfernbar mit den Prozessoren verbunden ist und ein nicht-flüchtiges, greifbares computerlesbares Medium umfasst. Der Fachmann wird jedoch verstehen, dass die funktionalen Module in alternativen Ausführungsvarianten teilweise oder vollständig mittels Hardwarekomponenten ausgeführt sein können. Zudem sei hier festgehalten, dass in der Beschreibung zwar Computerprogrammcode spezifischen funktionalen Modulen zugeordnet wurde und dass die Ausführung von Schritten in einer bestimmten Reihenfolge dargestellt wurde, dass der Fachmann jedoch verstehen wird, dass der Computerprogrammcode unterschiedlich strukturiert und die Reihenfolge von mindestens gewissen Schritten geändert werden kann, ohne dabei vom Schutzgegenstand abzuweichen.

## Patentansprüche

1. Ein computerisiertes Maschinensteuerungssystem (1) zur Steuerung einer Maschine (15), das Maschinensteuerungssystem (1) umfassend:
ein Kommunikationsmodul zur Kommunikation mit Anwendungen eines übergeordneten Leit- oder Bediensystems (2);
einen von den Anwendungen des übergeordneten Leit- oder Bediensystems (2) unabhängigen, maschinenspezifischen Teil (10), welcher ein maschinenspezifisches Domänenmodell (102) mit Datenpunkten der Maschine (15), und ein Steuermodul (101) umfasst, das eingerichtet ist, über ein maschinenspezifisches Kommunikationsprotokoll auf die Datenpunkte der Maschine (15) zuzugreifen und entsprechende Datenpunkt-Objekte im maschinenspezifischen Domänenmodell (102) respektive Datenpunkte in der Maschine (15) zu aktualisieren; und
einen maschinenunabhängigen, anwendungsspezifischen Teil (11), welcher ein anwendungsspezifisches Domänenmodell (112) mit Datenobjekten, die für das Leit- oder Bediensystem (2) zugreifbar sind, und ein Abbildungsmodul (111) umfasst, das eingerichtet ist, auf das maschinenspezifische Domänenmodell (102) zuzugreifen und die Datenobjekte auf Datenpunkt-Objekte respektive Datenpunkt-Objekte auf Datenobjekte abzubilden.

2. Das Maschinensteuerungssystem (1) nach Anspruch 1, **dadurch gekennzeichnet, dass** das Steuermodul (101) eingerichtet ist, periodisch auf die Datenpunkte der Maschine (15) zuzugreifen um die entsprechenden Datenpunkt-Objekte im maschinenspezifischen Domänenmodell (102) zu aktualisieren, und dass das maschinenspezifische Domänenmodell (102) eingerichtet ist, Werte von Datenpunkt-Objekten im maschinenspezifischen Domänenmodell (102) nur auf Anfrage an den anwendungsspezifischen Teil (11) zu übermitteln.

3. Das Maschinensteuerungssystem (1) nach einem der Ansprüche 1 oder 2, **dadurch gekennzeichnet, dass** das Steuermodul (101) eingerichtet ist, über eine speicherprogrammierbare Steuerung (14) auf die Datenpunkte der Maschine (15) zuzugreifen, wobei das maschinenspezifische Kommunikationsprotokoll spezifisch auf die speicherprogrammierbare Steuerung (14) ausgerichtet ist, und dass das maschinenspezifische Domänenmodell (102) Datenpunkt-Objekte derjenigen Datenpunkte der Maschine (15) aufweist, die über die speicherprogrammierbare Steuerung (14) verfügbar sind.

4. Das Maschinensteuerungssystem (1) nach Anspruch 3, **dadurch gekennzeichnet, dass** das Steuermodul (101) eingerichtet ist, die Datenpunkt-Objekte im maschinenspezifischen Domänenmodell (102) erst dann zu aktualisieren, wenn die Datenpunkte, auf die über die speicherprogrammierbare Steuerung (14) zugegriffen wird, einen konsistenten Zustand aufweisen.

5. Das Maschinensteuerungssystem (1) nach einem der Ansprüche 1 bis 4, **dadurch gekennzeichnet, dass** das anwendungsspezifische Domänenmodell (112) als für das Leit- oder Bediensystem (2) zugreifbarer Dienst einer dienstorientierten Architekturplattform ausgeführt ist, wobei eine Dienstdefinition und die Datenobjekte des anwendungsspezifischen Domänenmodells (112) für die Anwendungen des übergeordneten Leit- oder Bediensystems (2) über eine für das Leit- oder Bediensystem (2) zugreifbare Schnittstelle der dienstorientierten Architekturplattform definiert sind.

6. Das Maschinensteuerungssystem (1) nach einem der Ansprüche 1 bis 5, **dadurch gekennzeichnet, dass** das maschinenspezifische Domänenmodell (102) als verfügbarer Dienst einer dienstorientierten Architekturplattform ausgeführt ist, wobei eine Dienstdefinition und die Datenpunkt-Objekte des maschinenspezifischen Domänenmodells (102) über eine für Dienstkonsumenten zugreifbare Schnittstelle der dienstorientierten Architekturplattform definiert sind, und der Dienst für die Dienstkonsumenten über die dienstorientierte Architekturplattform zugreifbar ist.

7. Das Maschinensteuerungssystem (1) nach einem der Ansprüche 5 oder 6, **dadurch gekennzeichnet, dass** Dienste der dienstorientierten Architekturplattform jeweils eingerichtet sind, vom übergeordneten Leit- oder Bediensystem (2) periodische Wachhalteanfragen zu empfangen und zur Sicherstellung von Verbindungen mit dem Leit- oder Bediensystem (2) unmittelbar mit einer Wachhalteantwort zu beantworten.

8. Das Maschinensteuerungssystem (1) nach einem der Ansprüche 1 bis 7, **dadurch gekennzeichnet, dass** das Kommunikationsmodul ein Laufzeitmodul mit Kommunikationsfunktionen der Windows Communication Foundation umfasst, und dass das anwendungsspezifische Domänenmodell (112) als Dienst der Windows Communication Foundation ausgeführt ist, wobei eine Dienstdefinition und die Datenobjekte des anwendungsspezifischen Domänenmodells (112) für die Anwendungen des übergeordneten Leit- oder Bediensystems über eine Contract Schnittstelle der Windows Communication Foundation definiert sind.

9. Das Maschinensteuerungssystem (1) nach einem der Ansprüche 1 bis 8, **dadurch gekennzeichnet, dass** das Steuermodul (101) eingerichtet ist, mittels Anfragemeldungen periodisch die Verfügbarkeit der Maschine (15) zu überprüfen und dem maschinenspezifischen Domänenmodell (102) einen Statuswert zuzuordnen, der angibt, dass das maschinenspezifische Domänenmodell (102) nicht mit der Maschine (15) verbunden ist, wenn innerhalb einer definierten Zeitdauer eine Antwortmeldung auf die Anfragemeldung ausbleibt.

10. Ein Computerprogrammprodukt umfassend ein computerlesbares Medium mit darauf gespeichertem Computerprogrammcode zur Steuerung eines oder mehrerer Prozessoren eines Maschinensteuerungssystems (1) zur Steuerung einer Maschine (15), wobei der Computerprogrammcode bewirkt, dass das Maschinensteuerungssystem (1)
ein von Anwendungen eines übergeordneten Leit- oder Bediensystems (2) unabhängiges, maschinenspezifisches Domänenmodell (102) mit Datenpunkten der Maschine (15) erstellt, und über ein maschinenspezifisches Kommunikationsprotokoll auf die Datenpunkte der Maschine (15) zugreift und entsprechende Datenpunkt-Objekte im maschinenspezifischen Domänenmodell (102) respektive Datenpunkte in der Maschine (15) aktualisiert; und
ein maschinenunabhängiges, anwendungsspezifisches Domänenmodell (112) mit Datenobjekten erstellt, die für das Leit- oder Bediensystem (2) zugreifbar sind, und auf das maschinenspezifische Domänenmodell (102) zugreift und die Datenobjekte auf Datenpunkt-Objekte respektive Datenpunkt-Objekte auf Datenobjekte abbildet.

11. Das Computerprogrammprodukt nach Anspruch 10, **gekennzeichnet durch** Computerprogrammcode zur Steuerung der Prozessoren, derart, dass das Maschinensteuerungssystem (1) periodisch auf die Datenpunkte der Maschine (15) zugreift, um die entsprechenden Datenpunkt-Objekte im maschinenspezifischen Domänenmodell (102) zu aktualisieren, und Werte von Datenpunkt-Objekten im maschinenspezifischen Domänenmodell (102) nur auf Anfrage an das anwendungsspezifische Domänenmodell (112) überträgt.

12. Das Computerprogrammprodukt nach einem der Ansprüche 10 oder 11, **gekennzeichnet durch** Computerprogrammcode zur Steuerung der Prozessoren, derart, dass das Maschinensteuerungssystem (1) über eine speicherprogrammierbare Steuerung (14) auf die Datenpunkte der Maschine (15) zugreift, wobei das maschinenspezifische Kommunikationsprotokoll spezifisch auf die speicherprogrammierbare Steuerung (14) ausgerichtet ist, und im maschinenspezifischen Domänenmodell (102) Datenpunkt-Objekte derjenigen Datenpunkte der Maschine (15) erzeugt, die über die speicherprogrammierbare Steuerung (14) verfügbar sind.

13. Das Computerprogrammprodukt nach Anspruch 12, **gekennzeichnet durch** Computerprogrammcode zur Steuerung der Prozessoren, derart, dass das Maschinensteuerungssystem (1) die Datenpunkt-Objekte im maschinenspezifischen Domänenmodell (102) erst dann aktualisiert, wenn die Datenpunkte, auf die über die speicherprogrammierbare Steuerung (14) zugegriffen wird, einen konsistenten Zustand aufweisen.

14. Das Computerprogrammprodukt nach einem der Ansprüche 10 bis 13, **gekennzeichnet durch** Computerprogrammcode zur Steuerung der Prozessoren, derart, dass das Maschinensteuerungssystem (1) das anwendungsspezifische Domänenmodell (112) als für das Leit- oder Bediensystem (2) zugreifbaren Dienst einer dienstorientierten Architekturplattform erstellt und eine Dienstdefinition und die Datenobjekte des anwendungsspezifischen Domänenmodells (112) für die Anwendungen des übergeordneten Leit- oder Bediensystems (2) über eine für das Leit- oder Bediensystem (2) zugreifbare Schnittstelle der dienstorientierten Architekturplattform definiert.

15. Das Computerprogrammprodukt nach einem der Ansprüche 10 bis 14, **gekennzeichnet durch** Computerprogrammcode zur Steuerung der Prozessoren, derart, dass das Maschinensteuerungssystem (1) das maschinenspezifische Domänenmodell (102) als verfügbaren Dienst einer dienstorientierten Architekturplattform erstellt und eine Dienstdefinition und die Datenpunkt-Objekte des maschinenspezifischen Domänenmodells (102) über eine für Dienstkonsumenten zugreifbare Schnittstelle der dienstorientierten Architekturplattform definiert, wobei der Dienst für die Dienstkonsumenten über die dienstorientierte Architekturplattform zugreifbar ist.

16. Das Computerprogrammprodukt nach einem der Ansprüche 14 oder 15, **gekennzeichnet durch** Computerprogrammcode zur Steuerung der Prozessoren, derart, dass das Maschinensteuerungssystem (1) vom übergeordneten Leit- oder Bediensystem (2) periodische Wachhalteanfragen für Dienste der dienstorientierten Architekturplattform empfängt und zur Sicherstellung von Verbindungen mit dem Leit- oder Bediensystem (2) unmittelbar mit einer Wachhalteantwort beantwortet.

17. Das Computerprogrammprodukt nach einem der Ansprüche 10 bis 16, **gekennzeichnet durch** Computerprogrammcode zur Steuerung der Prozessoren, derart, dass das Maschinensteuerungssystem (1) zum Kommunizieren mit Anwendungen des übergeordneten Leit- oder Bediensystems (2) Kommunikationsfunktionen der Windows Communication Foundation verwendet, das anwendungsspezifische Domänenmodell (112) als Dienst der Windows Communication Foundation ausführt, und eine Dienstdefinition und die Datenobjekte des anwendungsspezifischen Domänenmodells (112) für die Anwendungen des übergeordneten Leit- oder Bediensystems (2) über eine Contract Schnittstelle der Windows Communication Foundation definiert.

18. Das Computerprogrammprodukt nach einem der Ansprüche 10 bis 17, **gekennzeichnet durch** Computerprogrammcode zur Steuerung der Prozessoren, derart, dass das Maschinensteuerungssystem (1) mittels Anfragemeldungen periodisch die Verfügbarkeit der Maschine (15) überprüft und dem maschinenspezifischen Domänenmodell (102) einen Statuswert zuordnet, der angibt, dass das maschinenspezifische (102) Domänenmodell nicht mit der Maschine (15) verbunden ist, wenn innerhalb einer definierten Zeitdauer eine Antwortmeldung auf die Anfragemeldung ausbleibt.

## Claims

1. A computerised machine control system (1) for controlling a machine (15), the machine control system (1) comprising:
a communications module for communicating with applications of a higher-level control or operating system (2);
a machine-specific component (10) which is independent of the applications of the higher-level control or operating system (2), and which comprises a machine-specific domain model (102) with data points of the machine (15) and a control module (101) which is configured to access the data points of the machine (15) via a machine-specific communications protocol and to update corresponding data-point objects in the machine-specific domain model (102) or data points in the machine (15); and
a machine-independent application-specific component (11) which comprises an application-specific domain model (112) with data objects which are accessible for the control or operating system (2) and a mapping module (111), which is configured to access the machine-specific domain model (102) and to map the data objects to data-point objects or data-point objects to data objects.

2. The machine control system (1) according to claim 1, **characterised in that** the control module (101) is configured to periodically access the data points of the machine (15) in order to update the corresponding data-point objects in the machine-specific domain model (102), and that the machine-specific domain model (102) is configured to only transmit values from data-point objects in the machine-specific domain model (102) to the application-specific component (11) upon request.

3. The machine control system (1) according to claim 1 or 2, **characterised in that** the control module (101) is configured to access the machine's (15) data points via a programmable logic controller (14), wherein the machine-specific communications protocol is specifically configured to the programmable logic controller (14), and that the machine-specific domain model (102) has data-point objects of those machine (15) data points that are available via the programmable logic controller (14).

4. The machine control system (1) according to claim 3, **characterised in that** the control module (101) is configured to update the data-point objects in the machine-specific domain model (102) only when the data points which are accessed via the programmable logic controller (14) have a consistent status.

5. The machine control system (1) according to one of claims 1 to 4, **characterised in that** the application-specific domain model (112) is realised as a service of a service-oriented architecture platform which can be accessed by the control or operating system (2), wherein a service definition and the data objects of the application-specific domain model (112) are defined for the applications of the higher-level control or operating system (2) via an interface of the service-oriented architecture platform which is accessible by the control or operating system (2).

6. The machine control system (1) according to one of claims 1 to 5, **characterised in that** the machine-specific domain model (102) is realised as a service available from a service-oriented architecture platform, wherein a service definition and the data-point objects of the machine-specific domain model (102) are defined via an interface of the service-oriented architecture platform which is accessible to service consumers, and the service is accessible to the service consumers via the service-oriented architecture platform.

7. The machine control system (1) according to one of claims 5 or 6, **characterised in that** services of the service-oriented architecture platform are each configured to receive periodic state-of-readiness enquiries from the higher-level control or operating system (2) and to respond immediately with a state-of-readiness response in order to ensure connections with the control or operating system (2).

8. The machine control system (1) according to one of claims 1 to 7, **characterised in that** the communications module comprises a run-time module with Windows Communication Foundation communications functions, and that the application-specific domain model (112) is realised as a Windows Communication Foundation service, wherein a service definition and the data objects of the application-specific domain model (112) are defined for the applications of the higher-level control or operating system via a Windows Communication Foundation contract interface.

9. The machine control system (1) according to one of claims 1 to 8, **characterised in that** the control module (101) is configured to periodically check the availability of the machine (15) by means of request messages and to assign a status value to the machine-specific domain model (102) which, in the absence within a defined period of time of a response message to the inquiry message, indicates that the machine-specific domain model (102) is not connected to the machine (15).

10. A computer program product comprising a computer readable medium with a computer program code stored thereon for controlling one or a number of processors of a machine control system (1) for controlling a machine (15), wherein the computer program code causes the machine control system (1):
to generate a machine-specific domain model (102) with data points of the machine (15), which model is independent of the applications of a higher-level control or operating system (2), and access the machine's (15) data points via a machine-specific communications protocol and update corresponding data-point objects in the machine-specific domain model (102) or data points in the machine (15); and
to generate a machine-independent application-specific domain model (112) with data objects which are accessible to the control or operating system (2), and access the machine-specific domain model (102) and map the data objects to data-point objects or data-point objects to data objects.

11. The computer program product according to claim 10, **characterised by** computer program code for controlling the processors such that the machine control system (1) periodically accesses the machine's (15) data points, in order to update the corresponding data-point objects in the machine-specific domain model (102) and only transmits values of data-point objects in the machine-specific domain model (102) to the application-specific domain model (112) upon request.

12. The computer program product according to one of claims 10 or 11, **characterised by** computer program code for controlling the processors such that the machine control system (1) accesses the machine's (15) data points via a programmable logic controller (14), wherein the machine-specific communications protocol is specifically configured to the programmable logic controller (14), and generates, in the machine-specific domain model (102), data-point objects of those machine (15) data points which are accessible via the programmable logic controller (14).

13. The computer program product according to claim 12, **characterised by** computer program code for controlling the processors such that the machine control system (1) does not update the data-point objects in the machine-specific domain model (102), until the data points which are accessed via the programmable logic controller (14) have a consistent status.

14. The computer program product according to one of claims 10 to 13, **characterised by** computer program code for controlling the processors such that the machine control system (1) generates the application-specific domain model (112) as the service of a service-orientated architecture platform which is accessible to the control or operating system (2), and defines a service definition and the data objects of the application-specific domain model (112) for the applications of the higher-level control or operating system (2) via an interface of the service-orientated architecture platform which is accessible to the control or operating system (2).

15. The computer program product according to one of claims 10 to 14, **characterised by** computer program code for controlling the processors such that the machine control system (1) generates the machine-specific domain model (102) as a service available from a service-orientated architecture platform and defines a service definition and the data-point objects of the machine-specific domain model (102) via an interface of the service-orientated architecture platform which is accessible to service consumers, wherein the service is accessible to the consumer-operators via the service-orientated architecture platform.

16. The computer program product according to one of claims 14 or 15, **characterised by** computer program code for controlling the processors such that the machine control system (1) receives periodic state-of-readiness requests from the higher-level control or operating system (2) for services of the service-orientated architecture platform, and responds directly with a state-of-readiness response in order to secure connections to the control or operating system (2).

17. The computer program product according to one of claims 10 to 16, **characterised by** computer program code for controlling the processors such that the machine control system (1) uses Windows Communication Foundation communication functions to communicate with applications of the higher-level control or operating system (2), realises the application-specific domain model (112) as a Windows Communication Foundation service, and defines a service definition and the data objects of the application-specific domain model (112) for the applications of the higher-level control or operating system (2) via a Windows Communication Foundation contract interface.

18. The computer program product according to one of claims 10 to 17, **characterised by** computer program code for controlling the processors such that the machine control system (1) periodically checks the availability of the machine (15) by means of request messages, and assigns a status value to the machine-specific domain model (102) which, in the absence within a defined period of time of a response message to the request message, indicates that the machine-specific domain model (102) is not connected to the machine (15).

## Revendications

1. Système de pilotage de machine informatisé (1) pour le pilotage d'une machine (15), le système de pilotage de machine (1) comprenant :
un module de communication pour la communication avec des applications d'un système de commande ou de guidage prioritaire (2) ;
une partie spécifique à la machine (10) indépendante des applications du système de commande ou de guidage prioritaire (2), laquelle comporte un modèle de domaine spécifique à la machine (102) avec des points de données de la machine (15), ainsi qu'un module de pilotage (101) conçu pour accéder aux points de données de la machine (15) par le biais d'un protocole de communication spécifique à la machine, et pour actualiser des objets de points de données correspondants dans le modèle de domaine (102) des points de données respectifs dans la machine (15) ; et
une partie spécifique à l'application (11), indépendante de la machine, laquelle comporte un modèle de domaine spécifique à l'application (112) avec des objets de données accessibles pour le système de commande ou de guidage (2), ainsi qu'un module de reproduction (111) conçu pour accéder au modèle de domaine spécifique à la machine (102) et pour reproduire des objets de données sur des objets de points de données des objets de points de données sur des objets de données.

2. Système de pilotage de machine (1) selon la revendication 1, **caractérisé en ce que** le module de pilotage (101) est conçu pour accéder périodiquement aux points de données de la machine (15) afin d'actualiser les objets de points de données correspondants dans le modèle de domaine spécifique à la machine (102), et **en ce que** le modèle de domaine spécifique à la machine (102) est conçu pour transmettre des valeurs d'objets de points de données dans le modèle de domaine spécifique à la machine (102) uniquement sur demande à la partie spécifique à l'application (11).

3. Système de pilotage de machine (1) selon l'une des revendications 1 ou 2, **caractérisé en ce que** le module de pilotage (101) est conçu pour accéder aux points de données de la machine (15) par le biais d'un contrôleur à mémoire programmable (14), dans lequel le protocole de communication spécifique à la machine est adapté spécifiquement au contrôleur à mémoire programmable (14), et **en ce que** le modèle de domaine spécifique à la machine (102) présente des objets de points de données des points de données de la machine (15) disponibles par le biais du contrôleur à mémoire programmable (14).

4. Système de pilotage de machine (1) selon la revendication 3, **caractérisé en ce que** le module de pilotage (101) est conçu pour actualiser les objets de points de données dans le modèle de domaine spécifique à la machine (102) uniquement lorsque les points de données consultés par le biais du contrôleur à mémoire programmable (14) présentent un état cohérent.

5. Système de pilotage de machine (1) selon l'une des revendications 1 à 4, **caractérisé en ce que** le modèle de domaine spécifique à l'application (112) est conçu comme un service d'une plateforme d'architecture orientée service accessible au système de commande ou de guidage (2), dans lequel une définition de service et les objets de données du modèle de domaine spécifique à l'application (112) sont définis pour les applications du système de commande ou de guidage prioritaire (2) par le biais d'une interface de la plateforme d'architecture orientée service accessible au système de commande ou de guidage (2).

6. Système de pilotage de machine (1) selon l'une des revendications 1 à 5, **caractérisé en ce que** le modèle de domaine spécifique à la machine (102) est conçu comme un service disponible d'une plateforme d'architecture orientée service, dans lequel une définition de service et les objets de points de données du modèle de domaine spécifique à la machine (102) sont définis par le biais d'une interface de la plateforme d'architecture orientée service accessible à des consommateurs de service, et le service est accessible aux consommateurs de service par le biais de la plateforme d'architecture orientée service.

7. Système de pilotage de machine (1) selon l'une des revendications 5 ou 6, **caractérisé en ce que** des services de la plateforme d'architecture orientée service sont respectivement conçus pour recevoir périodiquement des demandes de maintien en éveil et pour répondre immédiatement par une réponse de maintien en éveil pour assurer des liaisons avec le système de commande ou de guidage (2).

8. Système de pilotage de machine (1) selon l'une des revendications 1 à 7, **caractérisé en ce que** le module de communication comporte un module d'exécution avec des fonctions de communication de la Windows Communication Foundation, et **en ce que** le modèle de domaine spécifique à l'application (112) est conçu comme un service de la Windows Communication Foundation, dans lequel une définition de service et les objets de données du modèle de domaine spécifique à l'application (112) sont définis pour les applications du système de commande ou de guidage prioritaire par le biais d'une interface de contrat de la Windows Communication Foundation.

9. Système de pilotage de machine (1) selon l'une des revendications 1 à 8, **caractérisé en ce que** le module de pilotage (101) est conçu pour vérifier périodiquement la disponibilité de la machine (15) au moyen de messages de demande, et pour attribuer une valeur de statut au modèle de domaine spécifique à la machine (102), laquelle indique que le modèle de domaine spécifique à la machine (102) n'est pas relié à la machine (15), lorsque le message de demande n'est pas suivi d'un message de réponse dans une période de temps prédéfinie.

10. Produit de programme informatique comprenant un support lisible par ordinateur avec un code de programme informatique enregistré sur celui-ci pour la commande d'un ou de plusieurs processeurs d'un système de pilotage de machine (1) pour le pilotage d'une machine (15), dans lequel le code de programme informatique permet au système de pilotage de machine (1)
d'établir un modèle de domaine spécifique à la machine (102) avec des points de données de la machine (15), lequel est indépendant d'applications d'un système de commande ou de guidage prioritaire (2), et d'accéder aux points de données de la machine (15) par le biais d'un protocole de communication spécifique à la machine, et d'actualiser des objets de points de données correspondants dans le modèle de domaine spécifique à la machine (102) des points de données respectifs dans la machine (15) ; et
d'établir un modèle de domaine spécifique à l'application (112) indépendant de la machine, avec des objets de données accessibles au système de commande ou de guidage (2), et d'accéder au modèle de domaine spécifique à la machine (102) et de reproduire les objets de données sur des objets de points de données des objets de points de données sur des objets de données.

11. Produit de programme informatique selon la revendication 10, **caractérisé par** des codes de programme informatique pour la commande des processeurs de manière à ce que le système de pilotage de machine (1) accède périodiquement aux points de données de la machine (15), afin d'actualiser les objets de points de données correspondants dans le modèle de domaine spécifique à la machine (102), et transmette des valeurs d'objets de points de données dans le modèle de domaine spécifique à la machine (102) uniquement sur demande au modèle de domaine spécifique à l'application (112).

12. Produit de programme informatique selon l'une des revendications 10 ou 11, **caractérisé par** des codes de programme informatique pour la commande des processeurs, de manière à ce que le système de pilotage de machine (1) accède aux points de données de la machine (15) par le biais d'un contrôleur à mémoire programmable (14), dans lequel le protocole de communication spécifique à la machine est adapté spécifiquement au contrôleur à mémoire programmable (14), et produise, dans le modèle de domaine spécifique à la machine (102), des objets de points de données des points de données de la machine (15) disponibles par le biais du contrôleur à mémoire programmable (14).

13. Produit de programme informatique selon la revendication 12, **caractérisé par** des codes de programme informatique pour la commande des processeurs, de manière à ce que le système de pilotage de machine (1) actualise les objets de points de données dans le modèle de domaine spécifique à la machine (102) uniquement lorsque les points de données consultés par le biais du contrôleur à mémoire programmable (14) présentent un état cohérent.

14. Produit de programme informatique selon l'une des revendications 10 à 13, **caractérisé par** des codes de programme informatique pour la commande des processeurs, de manière à ce que le système de pilotage de machine (1) établisse le modèle de domaine spécifique à l'application (112) comme service d'une plateforme d'architecture orientée service accessible au système de commande ou de guidage (2), et définisse une définition de service et les objets de données du modèle de domaine spécifique à l'application (112) pour les applications du système de commande ou de guidage prioritaire (2) par le biais d'une interface de la plateforme d'architecture orientée service accessible au système de commande ou de guidage (2).

15. Produit de programme informatique selon l'une des revendications 10 à 14, **caractérisé par** des codes de programme informatique pour la commande des processeurs, de manière à ce que le système de pilotage de machine (1) établisse le modèle de domaine spécifique à la machine (102) comme service disponible d'une plateforme d'architecture orientée service et définisse une définition de service et les objets de points de données du modèle de domaine spécifique à la machine (102) par le biais d'une interface de la plateforme d'architecture orientée service accessible à des consommateurs de service, et le service étant accessible aux consommateurs de service par le biais de la plateforme d'architecture orientée service.

16. Produit de programme informatique selon l'une des revendications 14 ou 15, **caractérisé par** des codes de programme informatique pour la commande des processeurs, de manière à ce que le système de pilotage de machine (1) reçoive des demandes de maintien en éveil périodiques en provenance du système de commande ou de guidage (2) pour des services de la plateforme d'architecture orientée service, et réponde immédiatement par une réponse de maintien en éveil pour assurer des liaisons avec le système de commande ou de guidage (2).

17. Produit de programme informatique selon l'une des revendications 10 à 16, **caractérisé par** des codes de programme informatique pour la commande des processeurs, de manière à ce que le système de pilotage de machine (1) utilise des fonctions de communication de la Windows Communication Foundation pour communiquer avec des applications du système de commande ou de guidage prioritaire (2), mette en oeuvre le modèle de domaine spécifique à l'application (112) en tant que service de la Windows Communication Foundation, et définisse une définition de service et les objets de données du modèle de domaine spécifique à l'application (112) pour les applications du système de commande ou de guidage prioritaire (2) par le biais d'une interface de contrat de la Windows Communication Foundation.

18. Produit de programme informatique selon l'une des revendications 10 à 17, **caractérisé par** des codes de programme informatique pour la commande des processeurs, de manière à ce que le système de pilotage de machine (1) vérifie périodiquement la disponibilité de la machine (15) au moyen de messages de demande, et attribue une valeur de statut au modèle de domaine spécifique à la machine (102), laquelle indique que le modèle de domaine spécifique à la machine (102) n'est pas relié à la machine (15), lorsque le message de demande n'est pas suivi d'un message de réponse dans une période de temps prédéfinie.
